# EUROPEAN PATENT SPECIFICATION

(11) **EP 1 423 497 B1**
(45) Date of publication and mention of the grant of the patent: **12.09.2007**
(21) Application number: 02751326.6
(22) Date of filing: 25.07.2002
(51) Int. Cl.: C11D 11/00, C11D 3/20, C11D 3/02, C11D 3/22, C11D 17/00

(54) **THICKENED TOILET BOWL CLEANER**
VERDICKTE TOILETTENBECKENREINIGER
COMPOSITIONS EPAISSIES DE NETTOYAGE POUR CUVETTE DE TOILETTES

(30) Priority: 31.08.2001 GB 0121111
(43) Date of publication of application: 02.06.2004
(73) Proprietor: Reckitt Benckiser Inc., Parsippany, New Jersey 07054 (US)
(72) Inventor: CHEUNG, Tak Wai, Yuma, Arizona 85364 (US); COSTA, Benjamin, Nutley, NJ 07110 (US)
(74) Representative: Bowers, Craig Malcolm
(86) International application number: PCT/GB2002/003407
(87) International publication number: WO 2003/020863

(56) References cited:
- EP-A- 0 919 610
- EP-A- 0 957 156
- WO-A-00/17303
- WO-A-01/57174
- WO-A-97/15649
- WO-A-99/35227

## Description

The present invention relates to improved cleaning compositions which find particular use in hard surface cleaning applications.

Cleaning compositions are commercially important products and enjoy a wide field of utility in assisting in the removal of dirt and grime from surfaces, especially those characterized as useful with "hard surfaces". Hard surfaces are those which are frequently encountered in lavatories such as lavatory fixtures such as toilets, shower stalls, bathtubs, bidets, sinks, as well as countertops, walls, floors. In such lavatory environment various forms of undesirable residues are known to form including hard water stains as well as "soap scum stains". Hard water stains are mineral stains caused by the deposition of salts, such as calcium or magnesium salts, frequently present in hard water, soap scum stains are residues of fatty acid soaps such as soaps which are based on alkaline salt of low fatty acids, which fatty acids are known to precipitate in hard water due to the presence of metal salts therein leaving an undesirable residue upon such surfaces.

Various formulations in compositions of cleaning agents have been produced and are known to the art which cleaning agents are generally suited for one type of stain but not necessarily for both classes of stains. For example, it is known to the art that highly acidic cleaning agents comprising strong acids, such as hydrochloric acids, are useful in the removal of hard water stains. However, the presence of strong acids is known to be an irritant to the skin and further offers the potential of toxicological danger. Other classes of cleaning compositions and formulations are known to be useful upon soap scum stains, however, generally such compositions comprise an organic and/or inorganic acid, one or more synthetic detergents from commonly recognized classes such as those described in U.S. Patent No. 5,061,393; U.S. Patent No. 5,008,030; U.S. Patent No. 4,759,867; U.S. Patent No. 5,192,460; U.S. Patent No. 5,039,441. Generally, the compositions described in these patents are claimed to be effective in the removal of soap scum stains from such hard surfaces and may find further limited use in other classes of stains.

However, the formulations of most of the compositions within the aforementioned patents generally have relatively high amounts of acids (organic and/or inorganic) which raises toxicological concerns, and further none of the above patents provide any disinfecting properties.

Thus, it is among the objects of the invention to provide improved cleaning compositions which provide the benefits of low toxicity, and hard water stain removal and soap scum stain removal and are effective in providing a disinfecting effect and facilitate in the removal of soap scum stains and hard water stains, especially from hard surfaces. It is a further object of the invention to provide improved cleaning compositions which are particularly effective in hard water stain removal and soap scum stain removal, and which further features minimal irritability to the eyes, skin or mucous tissues of a consumer.

It is yet a further object of the invention to provide a readily pourable cleaning composition which features the benefits described above.

It is a further object of the invention to provide a process for the improvement of the simultaneous cleaning and sanitization of hard surfaces, which process comprises the step of: providing a cleaning composition as outlined above, and applying an effective amount to a hard surface requiring such treatment.

WO-A-99/35227 discloses acidic hard surface cleaning compositions containing alkyl aryl sulfonate surfactant, cleaning solvent and a polycarboxylic acid.

EP-A-957,156 discloses acidic hard surface cleaning compositions comprising an anionic surfactant, an acid, a polysaccharide polymer and a vinylpyrrolidone polymer.

WO-A-97/15649 and-WO-A-01/57174 disclose germicidal acidic hard surface cleaning compositions comprising acid sequestrant, solvent, surfactant and hydrotrope.

These and other objects of the invention shall be more apparent from a reading of the specification and of the claims attached.

According to the invention, there is provided an aqueous hard surface cleaning composition which comprises an acidic constituent which comprises either citric acid alone or citric acid in combination with an acid selected from the group consisting of sorbic acid, acetic acid, boric acid, formic acid, maleic acid, adipic acid, lactic acid, malic acid, malonic acid, glycolic acid, and mixtures thereof; 0.001 '- 10% by weight of at least one anionic surfactant; 0.001 - 5% by weight of a thickener selected from the group consisting of cellulose, alkyl celluloses, alkoxy celluloses, hydroxy alkyl celluloses, alkyl hydroxy alkyl celluloses, carboxy alkyl celluloses, carboxy alkyl hydroxy alkyl celluloses, xanthan gum, and mixtures thereof; low pH stable beads based on calcium algimate; one or more optional constituents; and the balance to 100% by weight, water; wherein the total amount of said low pH stable beads and optional constituents is not greater than 10% by weight and the aqueous hard surface cleaning composition exhibits a pH of 6.0 or less.

Preferably, the acid constituent is a combination of citric acid in combination with an acid selected from the group consisting of sorbic acid, acetic acid, boric acid, formic acid, maleic acid, adipic acid,lactic acid, malic acid, malonic acid, and glycolic acid. More preferably, the acid constituent is a combination of citric acid with lactic acid, glycolic acid or malic acid.

The amount of acid present in the composition, keeping in mind any optional ingredients that may be present, should be in an amount such that the pH of the composition is less than 6, preferably less than 4, and more preferably less than 3.

Preferably, the thickener is a combination of hydroxy alkyl cellulose and xanthan gum, more preferably a combination of hydroxy ethyl cellulose and xanthan gum.

The compositions of the invention may also include one or more further optional constituents such as known art additives. By way of non-limiting example, such constituents include: nonionic surfactants, coloring agents, including dyes and pigment compositions, fragrances, fragrance adjuvants and/or fragrance solubilizers, pH adjusting agents, pH buffers, antioxidants, water softening agents, and preservative compositions.

The compositions according to the invention are preferably acidic in character, exhibiting a pH of less than 6.0. desirably the pH is in the range of from 5.0 to 1.0 and yet more desirably is a pH in the range of 4.0 to 1.0 and most desirably is a pH in from 3.0 -1.0.

In a further aspect of the invention, there is also provided improved process for cleaning surfaces especially hard surfaces which includes the step of applying to the surface an effective amount of a stain releasing composition as taught herein to such surface.

The acidic constituent of the present invention comprises either citric acid alone or citric acid in combination with an acid selected from the group consisting of sorbic acid, acetic acid, boric acid, formic acid, maleic acid, adipic acid, lactic acid, malic acid, malonic acid, glycolic acid and mixtures thereof. Preferably, the acid constituent is citric acid in combination with an acid selected from the group consisting of sorbic acid, acetic acid, boric acid, formic acid, maleic acid, adipic acid, lactic acid, malic acid, malonic acid, glycolic acid, and mixtures thereof. More preferably, the acid constituent is citric acid in combination with lactic acid, glycolic acid or malic acid.

These acids provide free acidity within the cleaning composition which free acid reacts with the fatty acid metal salts which are comprised within soap scum stains releasing the metal ions and freeing the fatty acid, which facilitates the removal of these undesired stains from hard surfaces. These acids also sequester the resulting free metal ions which are released from the soap scum stains. Also where the acids are selected to feature disinfecting properties, they concomitantly provide anti-microbial activity necessary to disinfect the cleaned surface.

The acid constituent is desirably present In the formulations such that with the presence of optional ingredients taken into account, the pH of the formulation is at a pH of less than 6. more preferably, the pH is in the range of from 5.0 to 1.0 and most desirably is a pH in from 3.0 - 1.0. The pH range represents an amount of acid from 0.5 to 10% by weight based an the total weight of a composition.

Compositions of the present invention also in dudes at least anionic surfactant Suitable anionic surfactants include, for example, alcohol sulfates (e.g. alkali metal or ammonium salts of alcohol sulfates) and sulfonates, alcohol phosphates and phosphonates, alkyl sulfates, alkyl ether sulfates, sulfate esters of an alkylphenoxy polyoxyethylene ethanol, alkyl monoglyceride sulfates, alkyl sulfonates, afpha-olefin sulfonates, beta-alkoxy alkane sulfonates, alkyl ether sulfonates, ethoxytated alkyl sulfonates, alkylaryl sulfonates, alkyl benzene sulfonates, alkyl monoglyceride sulfonates, alkyl carboxylates, alkyl ether carboxylates, alkyl alkoxy carboxylates having 1 to 5 moles of ethylene oxide, sulfosuccinates, octoxynol or nonoxynol phosphates, taurates, fatty taurides, fatty acid amide polyoxyethylene sulfates, isethionates, and sarcosinates or mixtures thereof. Preferred anionics include alkyl sulfates. The anionic surfactant is present in the compositions of the present invention in an amount of from 0.1 to 10% by weight, more preferably from 0.5 to 4% by weight. The composition of the present of invention is thickened to a viscosity range of from 100 to 2000 centipoise, preferably to a viscosity of from 750 to 1000 centipoise, more preferably about 900 centipoise, at room temperature, measured by a Brookfield RVT viscometer, spindle #2, at 60 rpm. Thickeners useful in the present invention to achieve this viscosity are selected from the group consisting of cellulose, alkyl celluloses, alkoxy celluloses, hydroxy alkyl celluloses, alkyl hydroxy alkyl celluloses, carboxy alkyl celluloses, carboxy alkyl hydroxy alkyl celluloses, xanthan gum, and mixtures thereof. Examples of the cellulose derivatives include ethyl cellulose, hydroxy ethyl cellulose, hydroxy propyl cellulose, carboxy methyl cellulose, carboxy methyl hydroxyethyl cellulose, hydroxypropyl cellulose, hydroxy propyl methyl cellulose, and ethyl hydroxy ethyl cellulose. Preferably, the thickener is a mixture of hydroxy ethyl cellulose and xanthan gum.

The amount of thickener present in the composition preferably ranges from 0.1 to 4% by weight, more preferably from 0.1 to 2% by weight.

As is noted above, the compositions according to the invention are aqueous in nature.

Water is added to the above constituents in order to provide 100% by weight of the composition.

The water may be tap water, but is preferably distilled and is most preferably deionized water, If the water is tap water, it is preferably substantially free of any undesirable impurities such as organics or inorganics, especially minerals salts which are present In hard water which may thus interfere with the operation of Constituents A, B, C, as well as any other optional components of the aqueous

The compositions according to the invention may comprise one or more of the following optional components, the total weight of such optional constituents not exceeding 10% by weight of the total weight of the composition, more preferably not exceeding 5% by weight and is most preferably less than 5% by weight based on the total weight of the composition according to the invention.

Non-ionic surfactants of the conventionally known and used variety in this class of cleaning agents may be added in effective amounts, i.e., amounts which are shown to be effective in the cleaning compositions in facilitating the removal of greasy soils. Such greasy soils are to be differentiated from the hard water stains and the soap scum stains described earlier in this specification. However, it is also to be appreciated that the non-ionic surfactants of this optional constituent may be also at least partially effective in the solubilization and removal of soap scum stains. Exemplary nonionic surfactants include known nonionic surfactants which generally consist of a hydrophobic moiety, such as C6-C20 primary or secondary, branched or straight chain monoalcohols, C8-C18 mono- or dialkyphenols, C6-C20 fatty acid amides, and a hydrophilic moiety which consists of alkylene oxide units. These nonionic surfactants are for instance alkoxylation products of the above hydrophobic moieties, containing from 2 to 30 moles of alkylene oxide. As alkylene oxides ethylene-, propylene- and butylene oxides and mixtures thereof are used.

Typical examples of such nonionic surfactants are C9-C11 primary, straight-chain alcohols condensed with 5-9 moles of ethylene oxide, C12-C15 primary straight chain alcohols condensed with from 6-12 moles of ethylene oxide, or with 7-9 moles of a mixture of ethylene oxide and propylene oxide, C11-C15 secondary alcohols condensed with from 3-15 moles of ethylene oxide, and C10-C18 fatty acid diethanolamides, and tertiary amine oxides such as higher alkyl di(lower alkyl or lower substituted alkyl)amine oxides. Other useful nonionic surfactants include certain alkoxylated linear aliphatic alcohol surfactants which are believed to be the condensation products of a C8 -C10 hydrophilic moiety with alkylene oxides, especially polyethylene oxide and or polypropylene oxide moieties. Such alkoxylated linear alcohol surfactants are presently commercially available under the tradename PolyTergent® (BASF, Mt. Olive, NJ). Such nonionic surfactants are known to the art, and are more particularly described in McCutcheon's Detergents and Emulsifiers.

Further optional, but desirable constituents, include fragrances. Such fragrances may be added in any conventional manner, admixing to a composition or blending with other constituents used to form a composition, in amounts which are found to be useful to enhance or impart the desired scent characteristic to the composition, and/or to cleaning compositions formed therefrom.

In compositions which include a fragrance, it is frequently desirable to include a fragrance solubilizer which assists in the dispersion, solution or mixing of the fragrance constituent in an aqueous base. These include known art compounds, including condensates of 2 to 30 moles of ethylene oxide with sorbitan mono- and tri-C10-C20 alkanoic acid esters having a HLB of 8 to are also known as nonionic surfactants. Further examples of such suitable surfactants include water soluble nonionic surfactants of which many are commercially known and by way of non-limiting example include the primary aliphatic alcohol ethoxylates, secondary aliphatic alcohol ethoxylates. alkylphenol ethoxylates and ethylene-oxide-propylene oxide condensates on primary alkanols, and condensates of ethylene oxide with sorbitan fatty acid esters.. This fragrance solubilizer component is added in minor amounts, particularly amount which are found effective in aiding in the solubilization of the fragrance component but not in any significantly greater proportion, such that it would be considered as a detergent constituent Such minor amounts recited herein are generally up to 0.5% by weight of the total composition but is more generally an amount of 0.1% by weight, and less, and preferably is present in amounts of 0.05% by weight and less.

Further optional, but advantageously included constituents are one or more coloring agents which find use in modifying the appearance of the compositions and enhance their appearance from the perspective of a consumer or other end user. Known coloring agents, may be incorporated in the compositions in any effective amount to improve or impart to compositions a desired appearance or color. Such a coloring agent or coloring agents may be added in a conventional fashion, i.e., admixing to a composition or blending with other constituents used to form a composition.

The use of one or more pH adjusting agents, including minor amounts of mineral acids, basic compositions, and organic acids may be used. An exemplary composition includes citric acid, such as is available in an anhydrous salt form of an alkali metal citric acid. The addition of an effective amount such a pH adjusting agent is useful in establishing a targeted pH range for compositions according to the invention. The addition of an effective amount of a pH buffering composition so to maintain the pH of the inventive compositions may also be added. While the composition of the invention generally does not require a pH buffering composition, the use of such a pH buffering composition may provide the benefit of hard water ion sequestration. Examples of such useful pH buffer compounds and/or pH buffering systems or compositions the alkali metal phosphates, polyphospates, pyrophosphates, triphosphates, tetraphosphates, silicates, metasilicates, polysilicates, carbonates, hydroxides, and mixtures of the same. Certain salts, such as the alkaline earth phosphates, carbonates, hydroxides, can also function as buffers. It may also be suitable to use buffers such as materials as aluminosilicates (zeolites), borates, aluminates and certain organic materials such as gluconates, succinates, maleates, citrates, and their alkali metal salts. Such buffers keep the pH ranges of the compositions of the present invention within acceptable limits. Others, not particularly elucidated here may also be used. Preferably, citric acid, such as is available in an anhydrous salt form of an alkali metal citric acid is added as it is readily commercially available, and effective. The addition of such a buffering agent is desirable in certain cases wherein long term, i.e., prolonged storage, is to be anticipated for a composition, as well as insuring the safe handling of said aqueous composition.

Preservatives may also be added in minor amounts in the formulations according to the invention which preservative compositions do not include a disinfectant component. Known art compositions may be used. Examples of such preservatives compounds include those which are presently commercially available under the tradenames KathonX CG/ICP (Rohm & Haas, Philadelphia PA), SuttocideX A (Sulton Labs, Chatham NJ) as well as MidtectX TFP (Tri-K Co., Emerson. NJ). Such preservatives are generally added in only minor amounts, i.e., amounts of 0.5% by weight of the total composition, more generally an amount of 0.1% by weight and less, and preferably is present in amounts of 0.05% bv weight and less.

Another ingredient are low pH stable beads based on calcium alginate (although these are included; the calculation of the total weight of optional constituents above). These beads provide a visual effect and can provide the user of the composition with an indication that the composition has been evenly applied to the surface to be treated. One example of these beads is calcium alginate from geniaLabs. Germany. These beads can be in a variety of colors.

The benefits of the compositions described in this specification include particularly: good removal of hard water stains, good removal of soap scum stains, relatively low toxicity, as well as ease in handling of the composition due to its readily pourable or pumpable characteristic, and when needed, disinfection. Further, when the beads and one or more of the optional constituents is added, i.e., fragrance and coloring agents, the aesthetic and consumer appeal of the product is favorably improved.

The compositions according to the invention are useful in the cleaning and/or disinfecting of hard surfaces, having deposited soil thereon. In such a process, cleaning and disinfecting of such surfaces comprises the step of applying a stain releasing and disinfecting effective amount of a composition as taught herein to such a stained surface. Afterwards, the compositions are optionally but desirably wiped, scrubbed or otherwise physically contacted with the hard surface, and further optionally, may be subsequent rinsed from the surface.

The hard surface cleaner composition provided according to the invention can be desirably provided as a ready to use product in a pourable or manually squeezed bottle (deformable bottle). Examples of such squeezed bottles include United States Design Patent Nos. D406,530, D406,531 , D410,847, and D383,678 in such an application, the consumer generally applies an effective amount of the cleaning composition and within a few moments thereafter, wipes off the treated area with a rag, towel, brush or sponge, usually a disposable paper towel or sponge. In certain applications, however, especially where undesirable stain deposits are heavy, the cleaning composition according to the invention may be left on the stained area until it has effectively loosened the stain deposits after which it may then be wiped off, rinsed off, or otherwise removed. For particularly heavy deposits of such undesired stains, multiple applications may also be used.

The following examples below illustrate exemplary formulations and preferred formulations of the inventive composition.

Throughout this specification and in the accompanying claims, weight percents of any constituent are to be understood as the weight percent of the active portion of the referenced constituent, unless otherwise indicated.

### Example Formulations

### Preparation of Example Formulations:

Exemplary formulations illustrating certain preferred embodiments of the inventive compositions and described in more detail in Table I below were formulated generally in accordance with the following protocol.

Into a suitably sized vessel, a measured amount of water was provided after which the constituents were added in the following sequence: thickening agent, surfactant, acid and lastly the coloring and fragrance constituents. Mixing, which generally lasted from 5 minutes to 120 minutes was maintained until the particular formulation appeared to be homogeneous. The exemplary compositions were readily pourable, and retained well mixed characteristics (i.e., stable mixtures) upon standing for extended periods, even in excess of 120 days. The constituents may be added in any order.

Examples of inventive formulations are shown in Table 1 below.

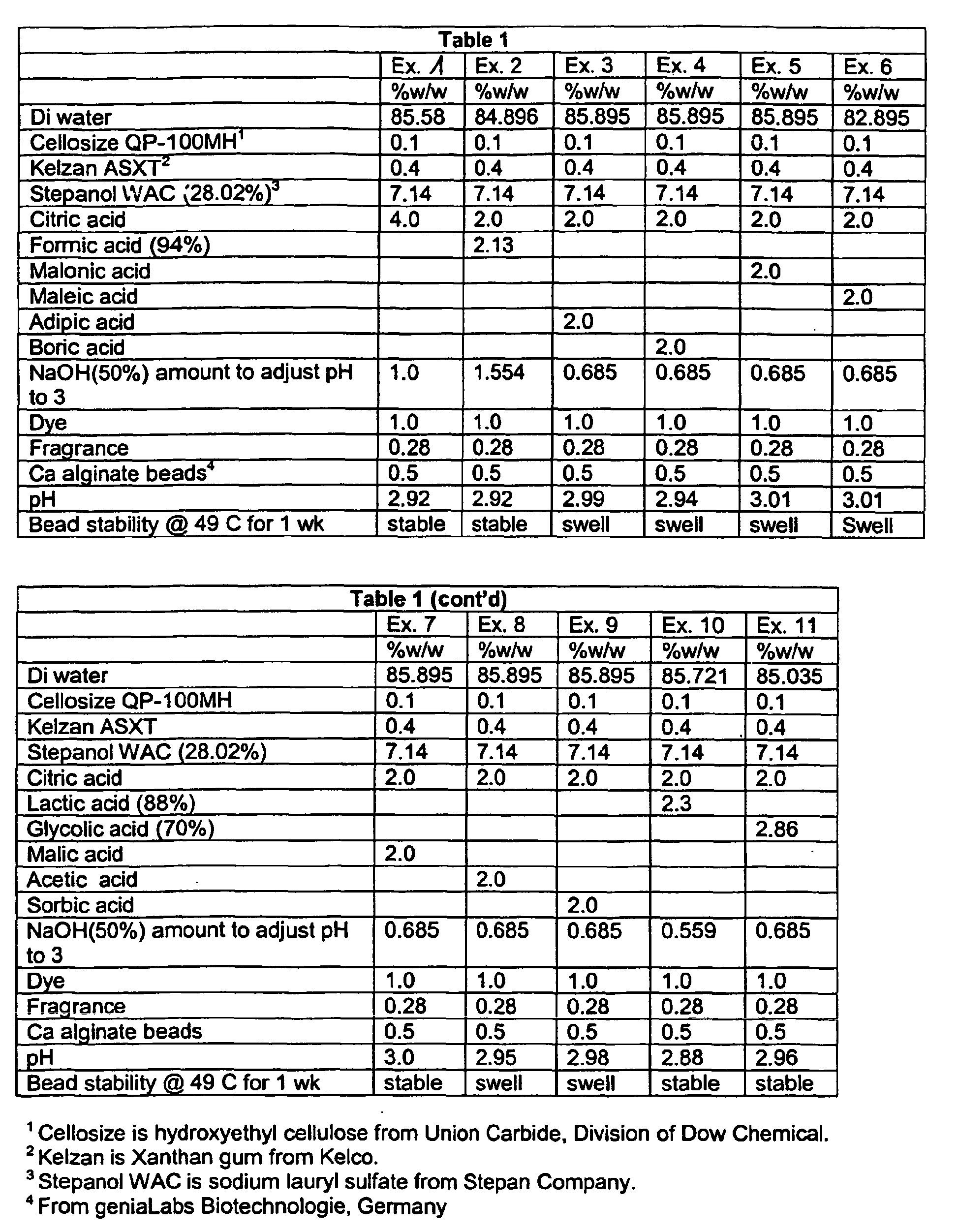

### Cleaning Efficacy:

Formulations of the present invention are expected to have good cleaning efficacy. For example, Ex. 10 was tested in a limescale removal test Therein, marble tiles, measuring 5 3/4" x 2 7/8' x 3/8" (14.6cm×7.3cm×0.95cm), were washed and dried for 1 hour @ 80°C. The tiles were then weighed, immersed in 900 mls of test formula for 10 seconds, removed and allowed to sit for 10 minutes. The tiles were then rinsed thoroughly, towel dried and dried for another hour @ 80°C. The tiles were then cooled completely and reweighed.

### Ex.10

| **Tile#** | **Initial Wt** | **Final Wt** | **LS Removed** | **%Wt Loss** |
|---|---|---|---|---|
| 1 | 294.0960 | 294.0490 | 0.0470 | 0.0160 |
| 2 | 293.4320 | 293.3760 | 0.0560 | 0.0191 |
| 3 | 295.4210 | 295.3680 | 0.0530 | 0.0179 |
| 4 | 298.8390 | 298.7870 | 0.0520 | 0.0174 |
| 5 | 304.0830 | 304.0290 | 0.0540 | 0.0178 |
| | | Average | 0.0524 | 0.0176 |

### Current Lysol Cling Toilet Bowl Cleaner Country Scent

| **Tile#** | **Initial Wt** | **Final Wt** | **LS Removed** | **%Wt Loss** |
|---|---|---|---|---|
| 6 | 295.8070 | 295.7860 | 0.0110 | 0.0037 |
| 7 | 296.8830 | 296.8690 | 0.0140 | 0.0047 |
| 8 | 291.8520 | 291.8400 | 0.0120 | 0.0041 |
| 9 | 300.3410 | 300.3370 | 0.0040 | 0.0013 |
| 10 | 299.4050 | 299.3920 | 0.0130 | 0.0043 |
| | | Average | 0.0108 | 0.0036 |

### Evaluation of Antimicrobial Efficacy

Formulations of the present invention are expected to have good antimicrobial efficacy. As an example, Ex. 10 was tested against Rotavirus at 30 sec and 10 minute contact times under current US EPA guidelines. The tox level was 3.5 and Virus recovered was 6.67. For a 30 second contact time, a 3.17 log reduction was recorded with no virus detected above tox. The same results were recorded for the sample tested at 10 minute contact time.

In addition, Ex. 10 was tested under the AOAC Use Dilution Test against four standard test organisms, (*Staphylococcus aureus, Pseudomonas aeruginosa*, *Salmonella choleraesuis, and Escherichia coli*). Test was performed at a 1:25 dilution. The results are shown in the table below.

| Organism | Test Result | Conclusion |
|---|---|---|
| *S. aureus* | 1/60 | Pass |
| *Salmonella* | 1/60 | Pass |
| *E. coli* | 0/60 | Pass |
| *Pseudomonas* | 0/60 | Pass |

## Claims

1. An aqueous hard surface cleaning composition which comprises:
an acidic constituent which comprises either citric acid alone or citric acid in combination with an acid selected from the group consisting of sorbic acid, acetic acid, boric acid, formic acid, maleic acid, adipic acid, lactic acid, malic acid, malonic acid, glycolic acid, and mixtures thereof;
0.001 - -10% by weight of at least one anionic surfactant;
0.001 - 5% by weight of a thickener selected from the group consisting of cellulose, alkyl celluloses, alkoxy celluloses, hydroxy alkyl celluloses, alkyl hydroxy alkyl celluloses, carboxy alkyl celluloses, carboxy alkyl hydroxy alkyl celluloses, xanthan gum, and mixtures thereof;
low pH stable beads based on calcium alginate;
one or more optional constituents; and
the balance to 100% by weight, water;
wherein the total amount of said low pH stable beads and optional constituents is not greater than 10% by weight and the aqueous hard surface cleaning composition exhibits a pH of 6.0 or less.

2. The aqueous hard surface cleaning composition according to claim 1 wherein the acid constituent is citric acid alone or citric acid in combination with an acid selected from the group consisting of lactic acid, glycolic acid and malic acid.

3. The aqueous hard surface cleaning composition according to claim 2 wherein the thickener is a mixture of hydroxy alkyl celluloses, and xanthan gum.

4. The aqueous hard surface cleaning composition according to claim 3 wherein the hydroxy alkyl cellulose is hydroxy ethyl cellulose.

5. The aqueous hard surface cleaning and disinfecting composition according to claim 1 which includes an optional constituent selected from: nonionic surfactants, coloring agents, fragrances, fragrance adjuvants and/or fragrance solubilizers, pH adjusting agents, pH buffers, antioxidants, water softening agents, and, preservative compositions.

6. The aqueous hard surface cleaning composition according to claim 1 wherein the pH of the composition is from 4.0 to 1.0.

7. A process for the removal of stains from hard surfaces which comprises the step of applying an effective amount of the composition according to claim 1 to a hard surface needing such treatment.

## Patentansprüche

1. Wässrige Reinigungszusammensetzung für harte Oberflächen, umfassend
einen Säurebestandteil, der entweder einzig Zitronensäure oder Zitronensäure in Kombination mit einer Säure, ausgewählt aus der Gruppe, bestehend aus Sorbinsäure, Essigsäure, Borsäure, Ameisensäure, Maleinsäure, Adipinsäure, Milchsäure, Äpfelsäure, Malonsäure, Glycolsäure und Gemischen davon, umfasst;
0,001-10 Gew.-% mindestens eines anionischen oberflächenaktiven Mittels;
0,001-5 Gew.-% eines Verdickungsmittels, ausgewählt aus der Gruppe, bestehend aus Cellulose, Alkylcellulosen, Alkoxycellulosen, Hydroxyalkylcellulosen, Alkylhydroxyalkylcellulosen, Carboxyalkylcellulosen, Carboxyalkylhydroxyalkylcellulosen, Xanthangummi und Gemischen davon;
bei niedrigem pH-Wert stabile Perlen auf der Basis von Calciumalginat;
einen oder mehrere optionale(n) Bestandteil(e); und
den Rest auf 100 Gew.-% Wasser;
wobei die Gesamtmenge der bei niedrigem pH-Wert stabilen Perlen und der optionalen Bestandteile nicht mehr als 10 Gew.-% beträgt und die wässrige Reinigungszusammensetzung für harte Oberflächen einen pH-Wert von 6,0 oder weniger aufweist.

2. Wässrige Reinigungszusammensetzung für harte Oberflächen nach Anspruch 1, wobei der Säurebestandteil einzig Zitronensäure oder Zitronensäure in Kombination mit einer Säure, ausgewählt aus der Gruppe, bestehend aus Milchsäure, Glycolsäure und Äpfelsäure, ist.

3. Wässrige Reinigungszusammensetzung für harte Oberflächen nach Anspruch 2, wobei das Verdickungsmittel ein Gemisch aus Hydroxyalkylcellulosen und Xanthangummi ist.

4. Wässrige Reinigungszusammensetzung für harte Oberflächen nach Anspruch 3, wobei die Hydroxyalkylcellulose Hydroxyethylcellulose ist.

5. Wässrige Reinigungs- und Desinfektionszusammensetzung für harte Oberflächen nach Anspruch 1, die einen optionalen Bestandteil, ausgewählt aus nichtionischen oberflächenaktiven Mitteln, Farbmitteln, Duftstoffen, Duftstoffzusätzen und/oder Duftstofflöslichmachern, pHeinstellenden Mitteln, pH-Puffern, Antioxidationsmitteln, Wasserenthärtern und Konservierungszusammensetzungen, einschließt.

6. Wässrige Reinigungszusammensetzung für harte Oberflächen nach Anspruch1, wobei der pH-Wert der Zusammensetzung 4,0 bis 1,0 beträgt.

7. Verfahren zur Entfernung von Flecken von harten Oberflächen, das den Schritt des Aufbringens einer wirksamen Menge der Zusammensetzung nach Anspruch 1 auf eine eine derartige Behandlung benötigende harte Oberfläche umfasst.

## Revendications

1. Composition aqueuse pour le nettoyage de surfaces dures, qui comprend:
un constituant acide qui comprend de l'acide citrique seul ou bien de l'acide citrique en association avec un acide choisi dans le groupe consistant en l'acide sorbique, l'acide acétique, l'acide borique, l'acide formique, l'acide maléique, l'acide adipique, l'acide lactique, l'acide malique, l'acide malonique, l'acide glycolique et leurs mélanges ;
0,001 à 10 % en poids d'au moins un agent tensioactif anionique ;
0,001 à 5 % en poids d'un épaississant choisi dans le groupe consistant en la cellulose, des alkylcelluloses, des alkoxycelluloses, des hydroxyalkylcelluloses, des alkylhydroxyalkylcelluloses, des carboxyalkylcelluloses, des carboxyalkylhydroxyalkylcelluloses, la gomme xanthane et leurs mélanges ;
des billes à base d'alginate de calcium, stables aux pH bas ;
un ou plusieurs constituants facultatifs ; et
le pourcentage restant d'eau, pour parvenir à 100 % en poids ;
dans laquelle la quantité totale desdites billes stables aux pH bas et des constituants facultatifs est non supérieure à 10 % en poids et la composition aqueuse pour le nettoyage de surfaces dures présente un pH égal ou inférieur à 6,0.

2. Composition aqueuse pour le nettoyage de surfaces dures suivant la revendication 1, dans laquelle le constituant acide est l'acide citrique seul ou l'acide citrique en association avec un acide choisi dans le groupe consistant en l'acide lactique, l'acide glycolique et l'acide malique.

3. Composition aqueuse pour le nettoyage de surfaces dures suivant la revendication 2, dans laquelle l'épaississant est un mélange d'hydroxyalkylcelluloses et de gomme xanthane.

4. Composition aqueuse pour le nettoyage de surfaces dures suivant la revendication 3, dans laquelle l'hydroxyalkylcellulose est l'hydroxyéthylcellulose.

5. Composition aqueuse pour le nettoyage et la désinfection de surfaces dures suivant la revendication 1, qui comprend un constituant facultatif choisi entre : des agents tensioactifs non ioniques, des agents colorants, des parfums, des adjuvants de parfums et/ou des solubilisants de parfums, des agents d'ajustement du pH, des tampons de pH, des antioxydants, des agents d'adoucissement de l'eau et des compositions conservatrices.

6. Composition aqueuse pour le nettoyage de surfaces dures suivant la revendication 1, dans laquelle le pH de la composition est de 4,0 à 1,0.

7. Procédé pour éliminer des taches de surfaces dures, qui comprend l'étape d'application d'une quantité efficace de la composition suivant la revendication 1 à une surface dure ayant besoin d'un tel traitement.
